# EUROPEAN PATENT APPLICATION

(11) **EP 1 549 015 A1**
(43) Date of publication of application: **29.06.2005**
(21) Application number: 04257332.9
(22) Date of filing: 25.11.2004
(51) Int. Cl.: H04L 29/06, H04L 29/08, G06F 13/12

(54) **Method and apparatus for parallel processing of communication protocols**

(30) Priority: 24.12.2003 US 746624
(71) Applicant: LUCENT TECHNOLOGIES INC., Murray Hill, New Jersey 07974-0636 (US)
(72) Inventor: Bradac, Mark G., Batavia, Il 60510 (US)
(74) Representative: Watts, Christopher Malcolm Kelway, Dr.

(57) **Abstract**

This invention relates to a method and apparatus for parallel processing of communication protocols. More particularly, the invention is directed to an implementation of finite state machines (FSMs) to process, in parallel, communication protocols that are used in processing data packets. The parallel implementation of finite state machines allows for quick and efficient processing of data without using traditional store and forward techniques.

## Description

### BACKGROUND OF THE INVENTION

This invention relates to a method and apparatus for parallel processing of communication protocols. More particularly, the invention is directed to an implementation of wired logic devices in the form of finite state machines (FSMs) to process, in parallel, communication protocols that are used in processing communication data packets. The parallel implementation of finite state machines (FSMs) allows for quick and efficient processing of data without using more traditional software stacks and store/forward techniques.

While the invention is particularly directed to the art of processing communication protocols, and will be thus described with reference to specific examples, it will be appreciated that the invention may have usefulness in other fields and applications. For example, the invention may be implemented in connection with any communication protocol based product.

By way of background, traditional protocol handling techniques apply various software stacks (a widely used, stored program control mechanism) to single-threaded and multi-threaded processors and/or network processors with highly optimized instruction sets to process and generate protocol content. Typically, separate programs are used to process protocol layers in turn. Operating systems, or operating system constructs, are used to queue, store, forward, time and schedule messages between protocol layers and processes. Protocol processing proceeds after the entire message is received, i.e., stored and forwarded.

In the heretofore known software-based implementations for processing communication protocols, protocol state changes are emulated in software. This adds to the complexity of the system. In addition, only a single thread of data is executable at any given time. Accordingly, intermediate structures, queues and software are required to process the protocol layers (one at a time) at a rate which is significantly less than line rate. Typically, a variety of protocol layers are present in any one packet of data. For example, the packet data may include real time transfer protocol (RTP) data, user datagram protocol (UDP) data, internet protocol (IP) data, internet control message protocol (ICMP) data, internet protocol control protocol (IPCP) data, link control protocol (LCP) data and high level data link control (HDLC) data. Use of software also requires many software layers (e.g., operating system, application programs, etc.), such layers requiring additional communication techniques to accommodate dozens of developers of different disciplines and domains. In addition, in a software-based system, integrity of the data can only be assessed after the fact. Moreover, software systems require extensive hardware and software coordination. Last, use of software systems requires a strong hardware and software coupling which adds to the overhead required to process the protocol layers.

This rather sophisticated, but complex and relatively inefficient, software-based protocol layer processing technique has resulted from a focus on implementing software, e.g. layers upon layers of software, to improve a particular system. Historically, computer-based systems were cost effectively realized by controlling hardware with software. This renders the hardware more flexible. Motivation for this approach -- of building software layers upon software layers to support hardware -- originates from the fact that hardware is intrinsically rigid. That is, hardware functionalities are embedded in processors, memories and fixed function silicon. In addition, hardware can be relatively costly, especially when compared to software. Therefore, for cost and flexibility reasons, it became easier to use software as a flexibility control in any system.

Consequently, productivity improvements were fueled by a proliferation of programming languages. Each language was tailored to improve productivity in a specific problem domain solving a solution to a problem in some context. A subset of software dialects emerged. Further significant improvements were realized by employing translators, compilers and development environments. This approach -- using software to make hardware more flexible and to improve performance in computer-based technology -- has resulted in the generation of over 12,000 software development languages and environments.

Conversely, hardware logic has been largely ignored through the years. Hardware logic devices have traditionally been small, expensive and difficult to program with any useful capture language. In stark contrast to the software developments that have evolved through the years, there are less than 12 capture languages available for hardware logic.

However, in recent years, field programmable gate arrays (FPGAs) have emerged as an enabling technology for hardware, or wired, logic. FPGAs, along with the known capture languages, are able to provide much more simplified and efficient processing environments for applications in which these technologies are implemented. Moreover, FPGAs have become much more cost effective in recent years. Similarly, Application Specific Integrated Circuits (ASICs) have also evolved as a more economic alternative to traditional approaches.

Accordingly, it is desired to implement a parallel processing system for communication protocols that utilizes wired hardware logic, as opposed to the inefficient techniques currently used for processing communication protocols.

The present invention contemplates a new and improved system for parallel processing of communication protocols that resolves the above-referenced difficulties and others.

### SUMMARY OF THE INVENTION

A method and apparatus for parallel processing of communication protocols are provided.

In one aspect of the invention, the apparatus comprises an interface module operative to receive the packet data, at least one first finite state machine set, each finite state machine set being operative to process selected layers of the plurality of communication protocol layers of the packet data and to generate output data based on the processing, a second finite state machine set operative to store the packet data and process the output data, wherein the plurality of first finite state machine sets and the second finite state machine set operate in parallel whereby the plurality of protocol layers of the packet data are processed at line rate.

In another aspect of the invention, the at least one first finite state machine set and the second finite state machine set are formed of field programmable gate arrays.

In another aspect of the invention, the plurality of communication protocol layers includes an internet protocol (IP) layer, an internet control message protocol (ICMP) layer, a real time transfer protocol (RTP) layer, a user datagram protocol (UDP) layer, an internet protocol control protocol (IPCP) layer, a link control protocol (LCP) layer and a high level data link control protocol (HDLC) layer.

In another aspect of the invention, the apparatus comprises an interface module operative to receive the packet data, a first wired logic device operative to process first protocol layer data, a second wired logic device operative to process second protocol layer data, a third wired logic device operative to process third protocol layer data, a fourth wired logic device operative to process fourth protocol layer data and a fifth wired logic device operative to store the packet data and process data output from the first, second, third and fourth wired logic devices, wherein the first, second, third, fourth and fifth wired logic devices operate in parallel whereby the plurality of protocol layers of the packet data are processed at line rate.

In another aspect of the invention, the method comprises receiving the packet data and processing each layer of the packet data in parallel at line rate using wired logic.

In another aspect of the invention, the apparatus comprises means for receiving the packet data and means for processing each layer of the packet data in parallel at line rate using wired logic.

Further scope of the applicability of the present invention will become apparent from the detailed description provided below. It should be understood, however, that the detailed description and specific examples, while indicating preferred embodiments of the invention, are given by way of illustration only, since various changes and modifications within the spirit and scope of the invention will become apparent to those skilled in the art.

### DESCRIPTION OF THE DRAWINGS

The present invention exists in the construction, arrangement, and combination of the various parts of the device, and steps of the method, whereby the objects contemplated are attained as hereinafter more fully set forth, specifically pointed out in the claims, and illustrated in the accompanying drawings in which:
Figure 1 illustrates a network into which the present invention may be incorporated;
Figure 2 illustrates an implementation of the present invention;
Figure 3 illustrates packet interface signaling in connection with one embodiment of the present invention;
Figure 4 is a flowchart illustrating an embodiment according to the present invention;
Figure 5 is a flowchart illustrating an embodiment according to the present invention;
Figure 6 is a flowchart illustrating an embodiment according to the present invention;
Figure 7 is a flowchart illustrating an embodiment according to the present invention; and,
Figure 8 is a flowchart illustrating an embodiment according to the present invention.

### DETAILED DESCRIPTION OF THE PREFERRED EMBODIMENTS

The present invention represents a departure from the conventional approach to communication protocol processing and implementation. This new approach, according to the present invention, eliminates the overhead and the complexity associated with stored program control. In this regard, embodiments of the present invention employ N-parallel wired logic resources in the form of finite state machines (FSMs), or finite state machine sets. The FSM devices are of specialized function to process protocol layers (or fragments of protocol layers) in line and at line rate as the protocol data is received, i.e., before it is stored. These FSMs are implemented in wired logic to recognize, parse, time, translate, log, store, forward and generate protocol content.

As will be detailed below, the finite state machines (FSMs) are preferably implemented using field programmable gate arrays. However, any suitable wired logic device may be used. For example, ASIC devices may be used in some circumstances.

Implementation of the system of the present invention results in a variety of performance improvements. First, no emulation of finite state machines (FSMs) is required. Because a finite state machine (FSM) is actually used in at least one embodiment, the protocols are executed without a need for translation. Second, the system allows for multiple threads to be executed at line rate. This eliminates or severely reduces the need for intermediate structures, queues, and software control. Third, use of hardware wired logic allows for a more unified process. Fourth, integrity at line rate and in real time can be maintained using inline checkers. Fifth, use of hard wired logic requires less coordination and testing costs than is presently known. Last, overhead is minimized.

The invention is described below in an exemplary implementation. It should be understood that a variety of other environments exist that would be conducive to implementation of the invention, provided that the selected environment facilitates use of wired logic. The overall objectives of the invention remain the same for all such implementations -- reduce the amount of software stacking by implementing wired logic devices and gain efficiency by processing different protocol layers in parallel.

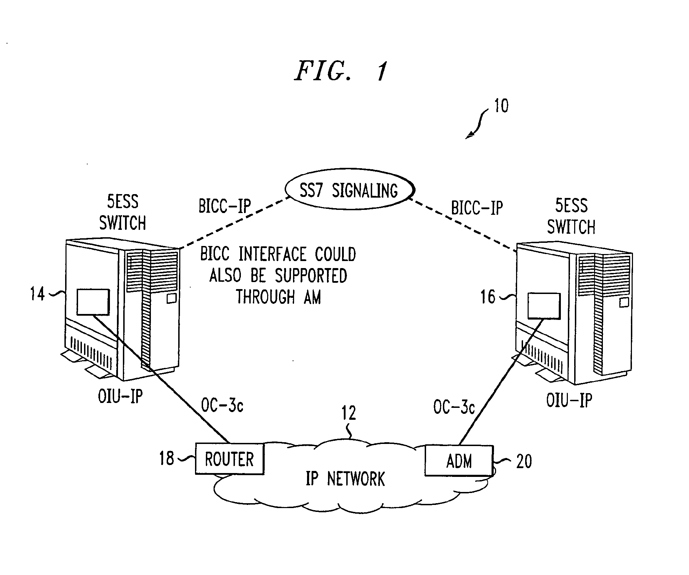

Referring now to the drawings wherein the showings are for purposes of illustrating the preferred embodiments of the invention only and not for purposes of limiting same, Figure 1 provides a view of a network into which the present invention may be implemented. As shown, an overall network 10 is illustrated as comprising an Internet Protocol (IP) backbone network 12 which communicates with optical interface units 14 and 16. As shown, a router 18 is provided between the IP backbone network 12 and the optical interface unit 14 while an add/drop multiplexer (ADM) 20 is provided between the IP backbone network 12 and the optical interface unit 16. Optical interface units 14 and 16 communicate with one another by using any one of a variety of signaling techniques such as SS7 signaling. Of course, it should be appreciated that a variety of network configurations may be used to realize the present invention.

Although the present invention may be implemented in a variety of applications to realize its many advantages, one implementation of the present invention is disposed within the optical interface unit 14. As those of skill in the art will appreciate, the optical interface unit 14 includes a variety of different circuit packs such as an optical facility interface (OFI). In this particular implementation, the optical facility interface (OFI) includes a packet field programmable gate array (FPGA) implemented therein.

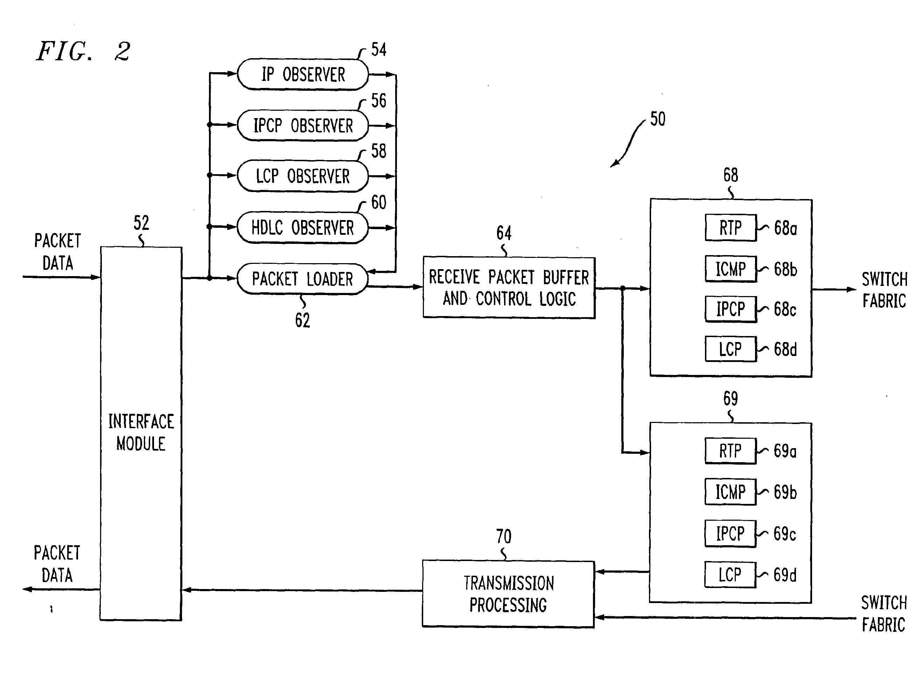

Referring now to Figure 2, a portion of such a field programmable gate array (FPGA) 50 is illustrated. As shown, the circuit includes an interface module 52 connected to a series of finite state machine sets. It should be understood that the finite state machines (FSMs) are arranged in sets that can include a single finite state machine (FSM) or many finite state machines (FSMs), depending on the design, objectives and configuration of the system into which the teachings of this invention are implemented. Different sets may also be combined in some applications. Where many finite state machines (FSMs) are implemented in a set designed to process a communication protocol layer, it should be appreciated that each individual finite state machine (FSM) is responsible for processing a portion of the communication protocol layer.

In one embodiment of the invention, these finite state machine sets include a first finite state machine (FSM) set forming an Internet Protocol (IP) observer 54, a second finite state machine (FSM) set forming an Internet Protocol Control Protocol (IPCP) observer 56, a third finite state machine (FSM) set forming a Link Control Protocol (LCP) observer 58, a fourth finite state machine (FSM) set forming a High Level Data Link Control (HDLC) observer 60 and a fifth finite state machine (FSM) set forming a received packet loader 62. Also shown is a received packet buffer and control logic 64 operative to receive data from the packet loader and forward it on to packet handlers 68 and 69. The received packet buffer and control logic 64 may take a variety of forms and may include use of finite state machine (FSM) logic.

It should be appreciated that, in this configuration, data is received within the interface module 52 in packet form from a communication network, processed by the finite state machine (FSM) sets 54-62, and ultimately forwarded to a switching fabric, such as that associated with an asynchronous transfer mode (ATM) switch, or otherwise transmitted through transmission processing module 70. For clarification, it should be understood that packet data includes both data content and control fields, unless otherwise specified. Indeed, in some cases, the control field of one communication protocol within the packet may also serve as the data content for another communication protocol.

As shown, and alluded to above, the portion of the circuit 50 illustrated handles transmission of packet data as well. In this regard, packet data may be received from the switch fabric or packet handler 69 and processed through a variety of transmission processing modules, illustratively shown as reference element 70. It should be understood that the processing module 70 may include a variety of elements useful in transmission of data such as buffers, loaders (resembling loader 62, for example), control logic and unloaders. In one embodiment, these elements may take the form of finite state machines or similar logic devices. Of course, any such finite state machine (FSM) may be implemented using an FPGA or the like. Once processed, the packet data is forwarded to the interface module 52 for transmission to its destination.

In operation, data is initially received at the interface module 52 in the form of packet data. Interface module 52 provides the handshaking techniques required to interface with the packet data network and actually receives the packet data. The interface module 52 performs certain processing functions on the packet data received. For example, the interface module determines that the packet data is available, and whether the packet data is valid. Interface module 52 also determines the start of the packet, the end of the packet, whether there is an error in the transfer of packet data, and whether certain types of data, i.e., modulo 2 data, are received. Once the interface module makes these preliminary determinations, the interface module provides it own output signals as input signals to the finite state machine (FSM) sets 54-62.

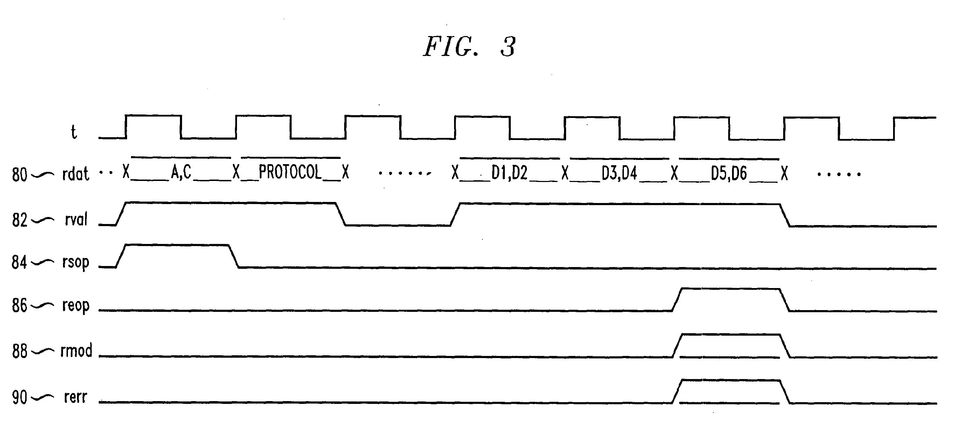

Along these lines, referring now to Figure 3, the interface module output signals are illustrated in time *t*. As shown, a received data signal (rdat) 80 is provided. This signal serves as the input signal for the received packet data. A validity signal (rval) 82 is also provided. A signal value of "1" means that the packet data is valid. A start of packet signal (rsop) 84 is also illustrated. A signal value of "1" indicates the start of the packet at a given time t. Likewise, an end of packet signal (reop) 86 is provided. A signal value of "1" at a particular time *t* indicates the end of the packet. A special type of data signal (rmod) 88 indicates whether modulo 2 data, for example, is received. Last, an error signal (rerr) 90 is illustrated. A signal value of "1" means that an error occurred in the transfer of the received packet.

Notably, these interface signals, along with the actual packet data, are provided to the finite state machine (FSM) sets 54-62 in parallel fashion. In this embodiment, the packet data is preferably transferred in 16-bit portions to the finite state machine (FSM) sets. However, larger or smaller portions may be transferred provided the finite state machine (FSM) sets are configured to accommodate such varying transfer sizes. Each of the finite state machine (FSM) sets 54-62 processes the packet data in a particular manner to achieve a particular objective for which it was designed. The data resulting from this processing is accumulated by the packet loader 62 and output for further processing along with the packet data. The advantage of this system is that each layer of the communication protocol can be processed in parallel and at line rate. There is no software stack, or layers of software, involved in this process. As a result, efficiency is greatly improved over that which was heretofore known.

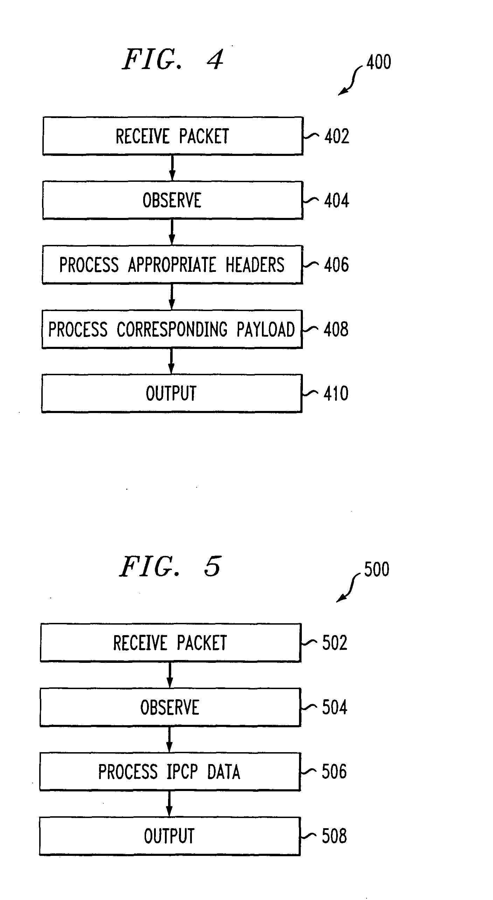

Referring now to Figure 4, the function 400 of the IP observer 54 is illustrated. In this regard, the IP observer receives the packet data (at 402). Once the packet data is received, the IP observer observes the packet (at 404). In this regard, for example, the IP observer 54 attempts to locate the IP header and IP payload within the packet data while ignoring other data fields within the packet data, such as HDLC address data and control data. In one embodiment, the IP observer also attempts to locate header and payload information for internet control message protocol (ICMP) packet data, user datagram protocol (UDP) packet data and real time transfer protocol (RTP) packet data. The IP observer then processes the appropriate header information (at 406). Likewise, the corresponding payloads are processed (at 408). It should be understood that the processing of all of this information, i.e. processing of the communication protocol layer, includes 1) recognizing, or identifying or parsing, the packet data, 2) validating the packet format and the appropriate parameters, 3) logging selected information such as packet errors, events and statistics, 4) monitoring packet arrival and transmission times, 5) providing transition of the protocol state and context, and 6) replying or generating the packet data (with content). The processing of the communication protocol layer provides selected determinations on whether the packet should be further forwarded and processed or dropped. It should be further understood that processing of the packet data is typically accomplished in light of applicable standards and industry agreements. For example, certain aspects of the processing, such as validating, include a determination of whether certain received values are known or expected, based on applicable standards and agreements. Last, the processed data is output (at 410). The output data will preferably include determinations on whether any of the data types have been seen and other status queries, as indicated above with respect to the processing, such as whether portions of the data are valid or not.

It should be understood that the IP observer may also be configured to only process Internet Protocol (IP) data. In this case, other finite state machines (FSMs) would be implemented to process the internet control message protocol (ICMP) packet data, the user datagram protocol (UDP) packet data and the real time transfer protocol (RTP) packet data. The configuration of these machines would, of course, be similar to that of the IP observer 54.

Similarly, the IPCP observer 56 handles packet data for its own selected purpose. As shown, the IPCP observer 56 receives the packet data (at 502). Next, the packet is observed by the IPCP observer (at 504). Of course, this observation includes a determination of the existence of internet protocol control protocol (IPCP) data such as IPCP code and packet length. Notably, the high level data link control (HDLC) address and other control data fields are ignored. The IPCP data is then processed (at 506). Again, it should be understood that the processing of this information, i.e. processing of the IPCP communication protocol layer, includes 1) recognizing, or identifying or parsing, the packet data, 2) validating the packet format and the appropriate parameters, 3) logging selected information such as packet errors, events and statistics, 4) monitoring packet arrival and transmission times, 5) providing transition of the protocol state and context, and 6) replying or generating the packet data (with content). The processing of the communication protocol layer provides selected determinations on whether the packet should be further forwarded and processed or dropped. It should be further understood that processing of the packet data is typically accomplished in light of applicable standards and industry agreements. For example, certain aspects of the processing, such as validating, include a determination of whether certain received values are known or expected, based on applicable standards and agreements. Once processed, the data is output (at 508). The output data will preferably include indications of whether an IPCP packet has been observed, for example. In addition, the output data may include indications of whether the packet should be dropped for reasons of bad packet length data, unsupported code or unsupported data type. The output data is, of course, based on the processing.

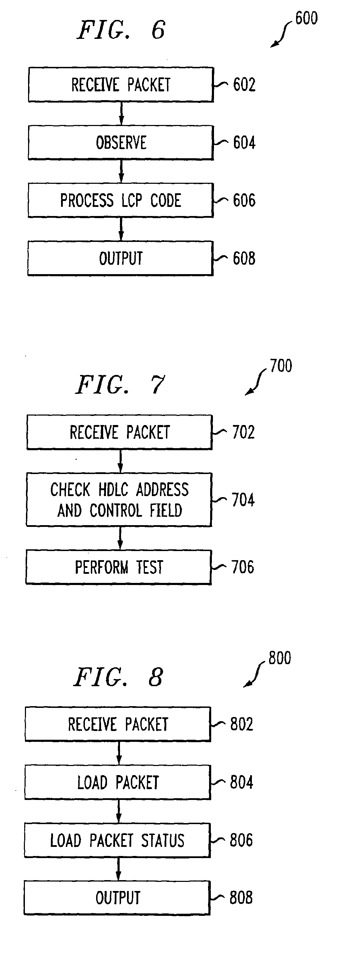

Similarly and concurrently, referring now the Figure 6, the LCP observer 58 receives the packet data (at 602). The packet data is observed (at 604). Again, this observation includes a determination of link control protocol (LCP) packet code. Other data fields such as the high level data link control (HDLC) address and control fields are ignored. The LCP observer then processes the link control protocol (LCP) packet data that is located (at 606). As above, it should be understood that the processing of this information, i.e. processing of the LCP communication protocol layer, includes 1) recognizing, or identifying or parsing, the packet data, 2) validating the packet format and the appropriate parameters, 3) logging selected information such as packet errors, events and statistics, 4) monitoring packet arrival and transmission times, 5) providing transition of the protocol state and context, and 6) replying or generating the packet data (with content). The processing of the communication protocol layer provides selected determinations on whether the packet should be further forwarded and processed or dropped. It should be further understood that processing of the packet data is typically accomplished in light of applicable standards and industry agreements. For example, certain aspects of the processing, such as validating, include a determination of whether certain received values are known or expected, based on applicable standards and agreements. The processed data is then output (at 608). Preferably, this output data includes indications on whether an LCP packet was received and other status information. For example, the output data may include information on whether any codes, protocol, or data types are unsupported. In addition, an indication of invalid data lengths may also be provided in the output data. Again, these forms of output are based on the processing steps.

It should be appreciated that the processing of both the LCP packet data and the IPCP packet data is useful for establishing a point-to-point protocol (PPP). In this regard, the processing of the LCP data is for the purpose of negotiating link parameters while the processing of IPCP data is for the purpose of negotiating IP parameters.

Referring now to Figure 7, the HDLC observer 60 performs the process 700 similar to those above and concurrently therewith. Packet data is received (at 702). The HDLC observer then checks for a high level data link control (HDLC) address and selected control fields (at 704). The HDLC observer 60 then performs suitable tests on the data (at 706). The validity of the address and control data is tested. Again, it should be understood that processing of the packet data is typically accomplished in light of applicable standards and industry agreements. For example, certain aspects of the processing, such as validating of the address and control fields, include a determination of whether certain received values are known or expected, based on applicable standards and agreements. If any of the data is invalid, appropriate indicators are set for purposes of further processing.

Because all of the finite state machines are operating concurrently, the data generated thereby is accumulated. In this regard, referring now to Figure 8, the packet loader 62 performs this function 800. As shown, the packet loader receives the packet data (at 802). Once data is received, the packet loader loads the packet into the received packet buffer 64 (at 804). The packet loader also loads and consolidates the packet status information received from the IP observer 54, IPCP observer 56, LCP observer 58 and HDLC observer 60 (at 806). This information is then used to direct further processing by the handlers. The appropriate data is then output (at 808).

It should be understood that the finite state machines, and/or finite state machine sets, implemented in accordance with the present invention are preferably implemented as field programmable gate arrays (FPGAs). Those of skill in the art will understand the details of programming such devices using appropriate capture languages. However, in at least one embodiment, the language disclosed and described in co-pending U.S. Patent Application to Clifford R. Johns and David A. Pierce, entitled "Hardware Design Protocol and System," bearing U.S. Application No. 09/975,113, filed on October 11, 2001, published on October 16, 2003 (Publication No. US 2003/0196194 A1), and incorporated herein by this reference, may be advantageously used. Moreover, alternatives to FPGAs may also be used. These alternatives include application specific integrated circuits (ASICs).

It should be appreciated that the implementation of the finite state machines in this portion of the circuit serves as merely an illustration of the invention. Similar functionality could be implemented using finite state machines in other portions of the network that are responsible for processing communication protocols. For example, the handlers 68 and 69 may be similarly implemented using finite state machines. Referring back to Figure 2, the handler 68 is shown as having RTP handler 68a, ICMP handler 68b, IPCP handler 68c and LCP handler 68d. Likewise, the handler 69 is shown as having RTP handler 69a, ICMP handler 69b, IPCP handler 69c and LCP handler 69d. These handlers are configured, operated and function in manners similar to or the same as the observers 54-60; however, the handlers process the packet data for transmission, as opposed to processing the packet date for receipt (as in the observers). So, the handler 68 processes packet data for transmission to the switching fabric while the handler 69 processes packet data (e.g., to generate reply packets and the like) for transmission through the transmission processing circuitry 70 and the interface module 52. Notably, in either case, the packet data is processed in such a way so that various communication protocol layers are processed in parallel -- employing the same technology as described above in connection with elements 54-62, except in terms of packet transmission as opposed to packet receipt. It will be understood, however, that not all communication protocol layers are present at this stage of processing. For example, the IP layer is not processed by the handlers. Moreover, the handlers may be configured in various manners to combine processing for more than one layer in a particular handler. For example, the HDLC layer is processed within one of the other handlers (i.e., in RTP, ICMP, IPCP or LCP handler) within handlers 68 and 69.

In all such implementations of the invention in various locations within the circuit and in other environments, the objectives are similar. That is, the various protocol layers can be processed in parallel and in just a few clock cycles to gain efficiency and continuity. Processing can occur at line rate and avoid the traditional store and forward approach used where many software layers are implemented to process the communication protocols.

The above description merely provides a disclosure of particular embodiments of the invention and is not intended for the purposes of limiting the same thereto. As such, the invention is not limited to only the above-described embodiments. Rather, it is recognized that one skilled in the art could conceive alternative embodiments that fall within the scope of the invention.

## Claims

1. An apparatus for processing packet data having a plurality of communication protocol layers, the apparatus comprising:
an interface module operative to receive the packet data;
at least one of first finite state machine set, each finite state machine set being operative to process selected layers of the plurality of communication protocol layers of the packet data and to generate output data based on processing;
a second finite state machine set operative to store the packet data and process the output data,
wherein the at least one first finite state machine set and the second finite state machine set operate in parallel whereby the plurality of protocol layers of the packet data are processed at line rate.

2. The apparatus as set forth in claim 1 wherein the at least one first finite state machine set and the second finite state machine set are formed of field programmable gate arrays.

3. The apparatus as set forth in claim 1 wherein the at least one first finite state machine set and the second finite state machine set are formed of application specific integrated circuits.

4. The apparatus as set forth in claim 1 wherein the plurality of communication protocol layers includes an internet protocol (IP) layer, an internet control message protocol (ICMP), a real time transfer protocol (RTP) layer, a user datagram protocol (UDP) layer, an internet protocol control protocol (IPCP) layer, a link control protocol (LCP) layer and a high level data link control protocol (HDLC) layer.

5. The apparatus as set forth in claim 1 wherein one of the at least one first finite state machine set processes internet protocol (IP) data, internet control message protocol (ICMP) data, user datagram protocol (UDP) data and real time transfer protocol (RTP) data.

6. The apparatus as set forth in claim 1 wherein one of the at least one first finite state machine set processes internet protocol control protocol (IPCP) data.

7. The apparatus as set forth in claim 1 wherein one of the at least one first finite state machine set processes link control protocol (LCP) data.

8. The apparatus as set forth in claim 1 wherein one of the at least one first finite state machine set processes high level data link control protocol (HDLC) data.

9. An apparatus for processing packet data having a plurality of communication protocol layers, the apparatus comprising:
an interface module operative to receive the packet data;
a first wired logic device operative to process first protocol layer data;
a second wired logic device operative to process second protocol layer data;
a third wired logic device operative to process third protocol layer data;
a fourth wired logic device operative to process fourth protocol layer data; and,
a fifth wired logic device operative to store the packet data and process data output from the first, second, third and fourth wired logic devices,
wherein the first, second, third, fourth and fifth wired logic devices operate in parallel whereby the plurality of protocol layers of the packet data are processed at line rate.

10. A method for processing packet data having a plurality of communication protocol layers, the method comprising:
receiving the packet data; and,
processing each layer of the packet data in parallel at line rate using wired logic.
